# FASCICULE DE BREVET EUROPEEN

(11) **EP 0 842 398 B1**
(45) Date de publication et mention de la délivrance du brevet: **28.11.2001**
(21) Numéro de dépôt: 96927125.3
(22) Date de dépôt: 01.08.1996
(51) Int. Cl.: G01F 1/08

(54) **COMPTEUR DE LIQUIDE A JET UNIQUE A COUPLE MOTEUR AMELIORE**
EINZELSTRAHLFLÜSSIGKEITSSTRÖMUNGSMESSER MIT VERGRÖSSERTEM DREHMOMENT
SINGLE JET LIQUIDE METER WITH IMPROVED MOTOR TORQUE

(30) Priorité: 04.08.1995 FR 9509544
(43) Date de publication de la demande: 20.05.1998
(73) Titulaire: SCHLUMBERGER INDUSTRIES S.A., 92120 Montrouge (FR)
(72) Inventeur: OSZAJCA, Henri, F-71000 Mâcon (FR); BRUNSON, Charles, Tallassee, AL 36078 (US)
(86) Numéro de dépôt international: FR9601221
(87) Numéro de publication internationale: WO9706414

(56) Documents cités:
- EP-A- 0 045 588
- EP-A- 0 100 393
- EP-A- 0 407 948
- BE-A- 428 806
- CH-A- 371 269
- DE-A- 3 509 576
- DE-C- 104 152

## Description

L'invention est relative à un compteur de liquide à jet unique comprenant un corps dans lequel est ménagée une chambre de mesure de forme sensiblement cylindrique équipée d'une turbine d'axe longitudinal XX' et munie de pales, deux tubulures d'amenée et d'évacuation du liquide raccordées audit corps et alignées suivant un axe rencontrant perpendiculairement ledit axe XX', un boîtier disposé dans ledit corps à la périphérie de la turbine et comportant deux fentes respectivement placées en vis à vis des tubulures d'amenée et d'évacuation, lesdites fentes étant destinées à injecter et éjecter l'écoulement de liquide de manière inclinée par rapport à l'axe d'alignement des tubulures.

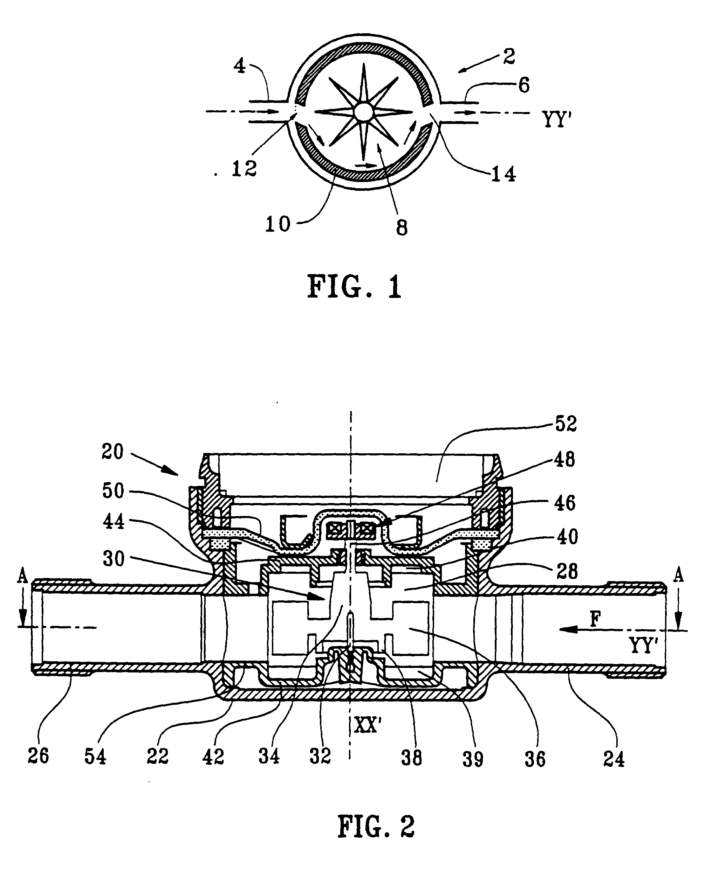

Les compteurs de liquide à jet unique comprennent généralement un corps à l'intérieur duquel se trouve une chambre de mesure de forme sensiblement cylindrique et qui est équipée d'une turbine tournant autour d'un axe longitudinal et munie d'une pluralité de pales.
Deux tubulures respectivement pour l'amenée du liquide dans la chambre de mesure et pour son évacuation hors de cette chambre sont raccordées au corps du compteur.
On trouve des compteurs dont les tubulures sont alignées entre elles mais qui sont déportées, c'est à dire que leur axe d'alignement ne rencontre pas l'axe longitudinal.
Cette disposition des tubulures est désavantageuse étant donné qu'elle rend difficile l'installation de ces compteurs dans les locaux de comptage où l'encombrement est souvent réduit.
Il existe des compteurs dont les tubulures sont également déportées par rapport à l'axe longitudinal de la turbine mais qui sont inclinées symétriquement par rapport à ladite turbine au lieu d'être alignées entre elles.
De tels compteurs imposent une modification de l'inclinaison des tubulures lorsque la longueur des compteurs varie.
Enfin, comme représenté à la figure 1, on trouve des compteurs 2 dont les tubulures d'amenée 4 et d'évacuation 6 du liquide sont alignées entre elles et dont l'axe d'alignement YY' rencontre perpendiculairement l'axe longitudinal XX' de la turbine 8.
Dans ce type de compteur, il est prévu de disposer dans le corps à la périphérie de la turbine 8 un boîtier 10 appelé aussi boite d'injection qui est généralement réalisé en matière plastique.
Ce boîtier comporte deux fentes 12 et 14 respectivement placées en vis à vis des tubulures d'amenée 4 et d'évacuation 6 du liquide. Les fentes 12 et 14 sont inclinées symétriquement par rapport à l'axe d'alignement des tubulures respectivement pour amener l'écoulement de liquide à la périphérie de la turbine et pour évacuer ledit écoulement à partir de la périphérie de la turbine.
Lorsque la turbine d'un tel compteur est entraînée en rotation par le liquide en circulation dans la chambre de mesure, elle transmet ce mouvement de rotation au totalisateur soit par un système d'entraînement magnétique soit mécaniquement par l'intermédiaire d'un train d'engrenages.
En raison de leur poids et des forces d'atténuation ou de répulsion, les aimants d'un système d'entraînement magnétique imposent au compteur un couple mécanique qui s'oppose à la mise en mouvement de la turbine particulièrement aux faibles débits. Ceci a pour conséquence d'augmenter l'erreur sur la précision des mesures effectuées par le compteur aux faibles débits.
Pour résoudre ce problème, on peut chercher à augmenter le nombre de pales de la turbine ou augmenter le nombre de nervures radiales disposées dans la partie inférieure et/ou supérieure de la chambre de mesure, voire disposer plusieurs fentes dans le boîtier en relation avec chaque tubulure.
Néanmoins, celà ne permet pas de réduire l'erreur sur la précision des mesures réalisées par le compteur aux faibles débits.
La Demanderesse s'est aperçue qu'il serait avantageux de concevoir un compteur de liquide à jet unique qui permette de réduire l'erreur sur la précision des mesures aux faibles débits, lorsque ledit compteur est équipé d'un système d'entraînement magnétique, et d'améliorer nettement la précision des mesures sur au moins une grande partie de la gamme de débits du compteur, lorsque celui-ci est doté d'un entraînement mécanique.
La présente invention a ainsi pour objet un compteur de liquide à jet unique tel que décrit dans la revendication 1.

Selon une caractéristique de l'invention,
la portion courbe la plus proche de la tubulure d'amenée est concave.
Pour des raisons de simplicité, la fente a préférentiellement une section de passage locale rectangulaire dont la plus grande dimension s'étend parallèlement à l'axe longitudinal XX'.

Lorsque la fente a une section de passage rectangulaire, la dimension de la fente qui s'étend perpendiculairement à l'axe longitudinal XX' dans un plan perpendiculaire à l'axe d'alignement YY' des tubulures est supérieure au diamètre interne de la tubulure d'amenée dans sa partie la plus proche de ladite tubulure.

Plus précisément, selon un mode de réalisation de l'invention, la portion courbe la plus proche de la tubulure d'amenée présente en projection dans un plan perpendiculaire à l'axe longitudinal XX' un profil circulaire C1.
La portion courbe qui possède une concavité inversée à celle qui est la plus proche de la tubulure d'amenée présente en projection dans un plan perpendiculaire à l'axe longitudinal XX' un profil circulaire C2 de plus grand rayon que C1.

Les deux profils circulaires C1 et C2 sont raccordés entre eux en projection dans un plan perpendiculaire à l'axe longitudinal XX' par un troisième profil circulaire C3 de concavité inverse à celle du profil circulaire C1 et qui possède un rayon supérieur à celui du profil circulaire C2.

Le profil de la surface de la première paroi située en regard de la tubulure d'amenée se prolonge en aval du profil circulaire C2 par un profil sensiblement rectiligne L1 en projection dans un plan perpendiculaire à l'axe longitudinal XX'.

Le profil sensiblement rectiligne L1 forme avec l'axe d'alignement YY' des tubulures, un angle d'inclinaison compris entre 28 et 32°.

Le profil sensiblement rectiligne L1 se prolonge vers l'aval par un autre profil sensiblement rectiligne L2 parallèle au profil sensiblement rectiligne de la paroi opposée.

Avantageusement, la paroi dont la surface est profilée masque la chambre de mesure à l'écoulement de liquide situé dans la tubulure d'amenée.

Les deux fentes sont symétriques l'une de l'autre par rapport à un plan perpendiculaire à l'axe d'alignement des tubulures et contenant l'axe longitudinal XX'.

Selon une variante de l'invention, deux fentes sont placées en vis-à-vis de la tubulure d'amenée du liquide, l'une desdites fentes appelée première fente offrant à l'écoulement de liquide une surface profilée augmentant progressivement la vitesse dudit écoulement.
Les deux fentes sont par exemple séparées l'une de l'autre par une paroi profilée placée en vis-à-vis de la tubulure d'amenée du liquide.
La seconde fente peut posséder une paroi qui est la plus éloignée de la surface profilée de la première fente et qui présente en projection dans un plan perpendiculaire à l'axe longitudinal XX' un profil concave.

D'autres caractéristiques et avantages apparaîtront au cours de la description qui va suivre, donnée à titre d'exemple non limitatif, faite en référence aux dessins annexés et sur lesquels :
- la figure 1 est une vue schématique d'un compteur d'eau à jet unique de l'art antérieur en coupe dans un plan perpendiculaire à l'axe longitudinal de la turbine dudit compteur,
- la figure 2 est une vue schématique d'un compteur d'eau selon un mode de réalisation de l'invention en coupe dans un plan contenant l'axe longitudinal XX' de la turbine et l'axe d'alignement des tubulures et'sur laquelle la paroi de chaque fente n'a pas été représentée,
- la figure 3 est une vue schématique du compteur d'eau de la figure 2 suivant la flèche A, sur laquelle la turbine axiale n'est pas représentée,
- la figure 3a est une vue schématique agrandie de l'injecteur du compteur d'eau de la figure 3, mais sur laquelle la position de l'injecteur est inversée par rapport à celle de la figure 3,
- la figure 3b est une vue schématique représentant respectivement la disposition des nervures inférieures 39 et celle des nervures supérieures 40,
- la figure 3c est une vue schématique d'une première variante de réalisation de l'invention analogue à la vue représentée sur le figure 3,
- la figure 3d est une vue schématique d'une deuxième variante de réalisation de l'invention analogue à la vue représentée sur le figure 3,
- la figure 4 représente deux courbes d'erreurs relatives en fonction du débit mesuré respectivement obtenues pour un compteur d'eau de l'art antérieur (courbe A) et pour un compteur d'eau selon l'invention (courbe B).

Comme représenté à la figure 2 et désigné dans son ensemble par la référence générale 20, un compteur d'eau à jet unique est formé d'un corps 22, appelé par la suite bâche du compteur, généralement réalisée en laiton et à laquelle sont raccordées deux tubulures 24 et 26 respectivement destinées à amener l'eau dans le compteur suivant la flèche F et à l'en évacuer.
A l'intérieur de la bâche du compteur se trouve une chambre de mesure 28 dans laquelle une turbine axiale 30 est montée à rotation autour d'un pivot 32 d'axe longitudinal XX'.
La turbine axiale comprend un moyeu central 34 auquel sont rattachées plusieurs pales 36 régulièrement espacées, par exemple au nombre de neuf.
Une collerette 38 est assujettie à l'extrémité inférieure du moyeu 34 et s'étend parallèlement à l'axe longitudinal XX'.
La fonction de cette collerette est de favoriser le soulèvement de la turbine axiale 30 aux débits élevés, c'est-à-dire par exemple supérieurs à 200 I/h, afin de ne pas dégrader la pointe du pivot 32 qui contribue à conférer au compteur sa sensibilité aux faibles débits.
Des nervures radiales dissymétriques 39 et 40 sont respectivement fixées aux deux parois d'extrémités opposées 42, 44 de la chambre de mesure.

La turbine axiale 30 porte à son extrémité supérieure un arbre 46 qui est équipé d'un mobile porte aimants 48 constituant la partie menante du système d'entraînement magnétique du compteur.

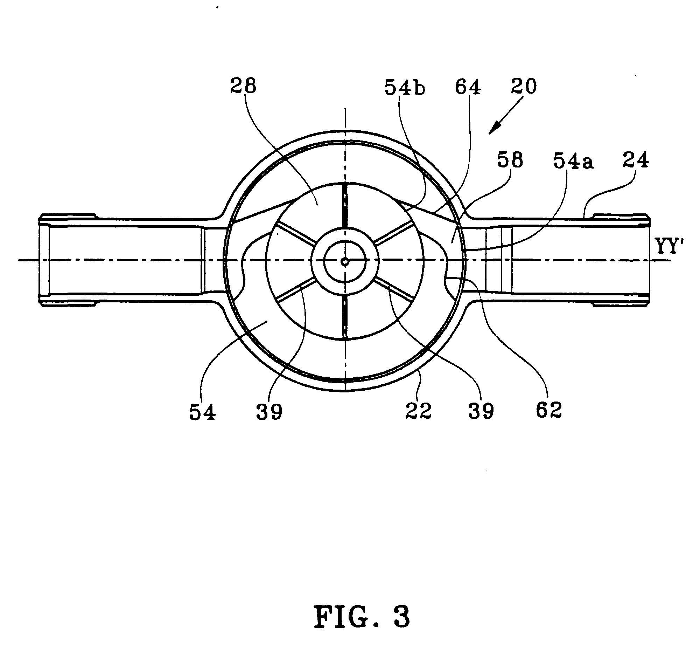

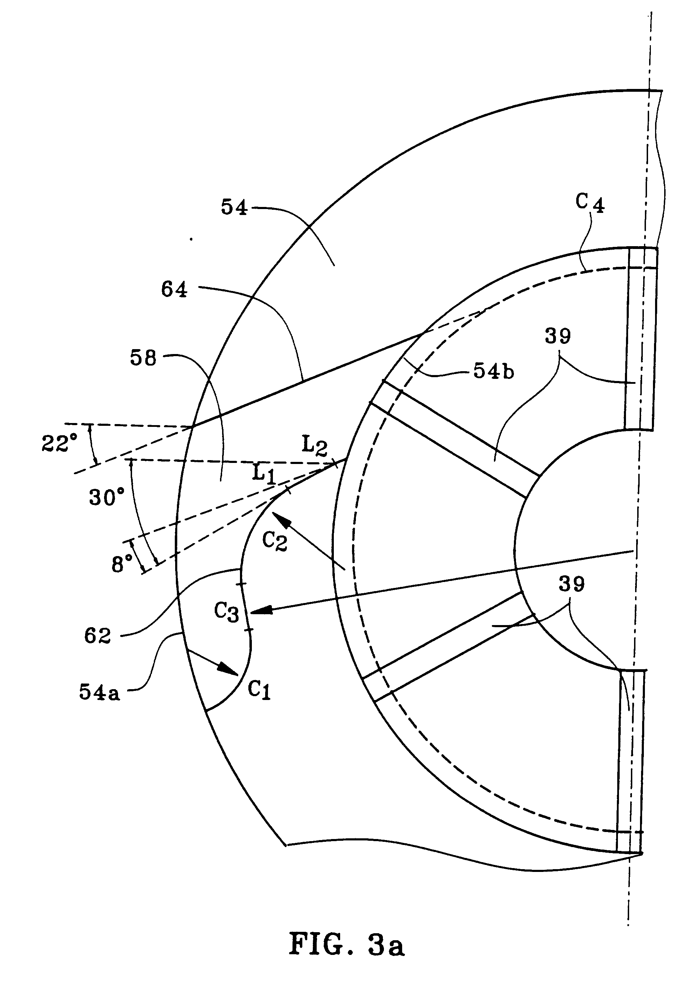

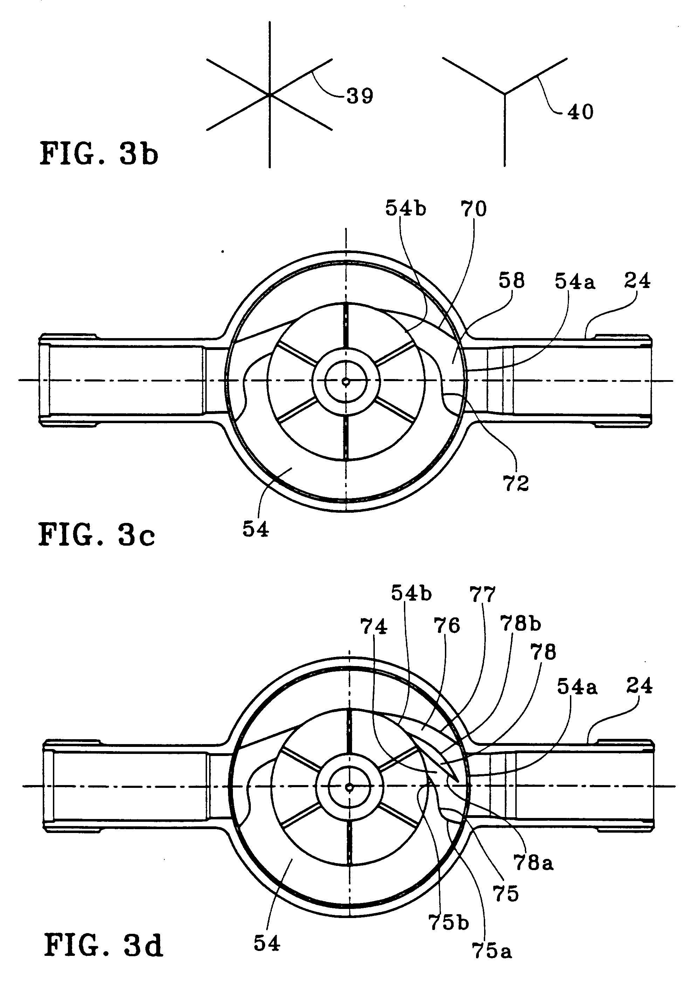

La partie menée du système d'entraînement magnétique du compteur est située au dessus de la paroi 50 dans le totalisateur 52 qui n'est pas représenté ici pour la clarté de l'exposé.
Un boîtier 54 réalisé en matière plastique par moulage est aménagé dans la bâche autour de la turbine axiale 30.
Ce boîtier appelé boite d'injection possède une paroi épaisse ayant une forme générale sensiblement cylindrique ainsi que représenté sur la figure 3, et une partie inférieure confondue avec la paroi d'extrémité 42 de la chambre de mesure 28.
La pièce 44 formant paroi d'extrémité opposée de la chambre de mesure (figure 2) également appelée platine supérieure ne fait pas partie de la boite d'injection 54. Cette pièce 44 comporte un palier dans lequel tourne l'arbre 46.
Comme représenté sur la figure 3, la boite d'injection comporte deux fentes 58 et 60 qui sont respectivement disposées en vis-à-vis des tubulures d'amenée 24 et d'évacuation 26 de l'eau.
Les tubulures 24 et 26 sont alignées entre elles suivant un axe YY' rencontrant perpendiculairement l'axe longitudinal XX' de la turbine 30.
Les fentes 58 et 60 sont respectivement appelées injecteur et éjecteur. L'injecteur 58 dévie l'écoulement de l'eau provenant de la tubulure 24 pour l'amener à la périphérie de la turbine alors que l'éjecteur 60 prélève l'eau située à la périphérie de la turbine pour l'évacuer vers la tubulure 26.
Tel que représenté sur la figure 3, l'injecteur 58 présente une surface profilée 62, dont la fonction est d'augmenter progressivement la vitesse de l'écoulement d'eau provenant de la tubulure d'amenée 24.
Cette surface profilée 62 est située en regard de la tubulure d'amenée d'eau 24 de manière à se trouver sur le trajet de l'écoulement.
La surface profilée est principalement formée de deux portions courbes dont les concavités sont inversées.
La portion courbe la plus proche de la tubulure d'amenée 24 est concave.
Dans la configuration illustrée par les figures 3 et 3a, la fente 58 a une section de passage locale rectangulaire et possède deux parois opposées 62, 64 qui définissent la plus grande dimension de ladite fente parallèle à l'axe longitudinal XX' et appelée hauteur.
La deuxième paroi 64 guide l'écoulement, mis en vitesse par la première paroi suivant une direction appropriée.
Il convient de noter que la fente 58 n'a pas nécessairement une section de passage de forme rectangulaire : il est également possible de prévoir une fente de forme plus complexe dont toute la surface intérieure serait profilée pour augmenter progressivement la vitesse de l'écoulement d'eau.
Par souci de simplification, la forme de l'injecteur 58 est celle représentée sur les figures 3 et 3a et ainsi, la tubulure d'amenée 24 de forme cylindrique et l'injecteur 58 ne se raccordent pas exactement.
La hauteur de l'injecteur 58 est sensiblement égale au diamètre interne de la tubulure d'amenée 24 mais la dimension de la fente qui s'étend perpendiculairement à l'axe longitudinal XX' dans le plan de la figure 3 et que l'on appelle largueur est supérieure au diamètre interne de ladite tubulure.
Comme représenté à la figure 3a, la surface profilée 62 se compose à partir de la tubulure d'amenée 24 d'une portion courbe qui présente en projection dans le plan de la figure 3a un profil circulaire C1 dont le centre est situé sur le bord extérieur 54a de la boite d'injection 54.
La surface profilée 62 se compose également d'une deuxième portion courbe présentant en projection dans le plan de la figure 3a un profil circulaire C2 convexe qui possède un rayon supérieur à celui du profil circulaire C1. Ces deux profils circulaires aux concavités inversées forment la plus grande partie de la surface profilée.
Ce deuxième profil circulaire C2 permet la mise en vitesse progressive de l'écoulement d'eau.
Ces deux profils C1 et C2 sont raccordés entre eux par un troisième profil circulaire C3 également convexe dont le centre est situé sur l'axe XX' de la turbine et qui possède un rayon très nettement supérieur à celui du profil circulaire C2.
La profil circulaire C3 est parallèle au bord extérieur 54a de la boite d'injection 54. La surface profilée 62 en projection dans le plan de la figure 3a se prolonge en aval du profil circulaire C2 par un profil sensiblement rectiligne L1.
Le profil L1 forme avec l'axe d'alignement des tubulures un angle d'inclinaison compris entre 28° et 32° et par exemple égal à 30°.
Ce profil L1 sert à faire converger l'écoulement d'eau.
Il convient de noter que le centre du profil circulaire C2 est déterminé par son rayon et par le raccordement aux profils C3 et L1.
En aval de ce profil, un autre profil sensiblement rectiligne L2 rejoint le bord intérieur 54b de la boite d'injection 54.
La deuxième paroi 64 présente en projection dans le plan de la figure 3a un profil sensiblement rectiligne.
Il convient de noter que ce profil pourrait également être concave. Le profil sensiblement rectiligne de la paroi 64 forme avec l'axe d'alignement YY' des tubulures, un angle d'inclinaison compris entre 19° et 24° et par exemple égale à 22°.
Lorsque ce profil est prolongé fictivement en direction de la chambre de mesure 28, il tangente un cercle C4 centré sur l'axe XX' et de diamètre inférieur au cercle décrit par l'extrémité des pales 36 de la turbine 30.
Cette caractéristique procure au compteur d'eau une bonne répétabilité des mesures.
Le profil L2 de la première paroi 62 est parallèle au profil rectiligne de la deuxième paroi 64 afin de réduire la déformation du jet en fonction du débit à l'entrée dans la chambre de mesure.
En outre, la paroi 62 de la fente 58 est agencée de manière à masquer la chambre de mesure à l'écoulement d'eau qui provient de la tubulure d'amenée d'eau 24. Cet agencement permet d'éviter un écoulement d'eau direct de la tubulure vers la chambre de mesure et qui ne serait pas affecté par la surface profilée 62.
Un tel écoulement direct aurait pour conséquence de déplacer vers le bas la courbe d'erreur aux débits élevés et donc d'accroître l'erreur réalisée sur les mesures pour de tels débits.
Avantageusement, la hauteur de l'injecteur 58 est supérieure à celle des pales 36 de la turbine axiale 30, ce qui permet de profiter de l'effet de cisaillement laminaire du jet d'eau débouchant dudit injecteur et donc d'améliorer le couple moteur aux bas débits.
Préférentiellement, lorsque l'on souhaite obtenir les mêmes performances du compteur au comptage et au décomptage (l'écoulement d'eau provenant alors de la tubulure d'évacuation 26) l'injecteur 58 et l'éjecteur sont symétriques l'un de l'autre par rapport à un plan perpendiculaire à l'axe d'alignement YY' des tubulures et qui contient l'axe longitudinal XX'.
Les nervures 39 fixées à la paroi 42 sont au nombre de six alors que les nervures 40 fixées à la paroi 44 sont au nombre de trois.
Les nervures 39 (resp. 40) sont régulièrement espacées entre elles.
Les trois nervures supérieures 40 forment un Y dont les deux branches du haut sont disposées en regard des fentes 58 et 60, la branche du bas étant disposée dans le plan perpendiculaire à l'axe YY' et contenant l'axe XX' (Fig 3b).
Cette configuration particulière procure au compteur d'eau une bonne sensibilité.
En outre, les six nervures inférieures 39 sont disposées de telles manière que deux nervures placées sur la même droite sont alignées dans le plan perpendiculaire à l'axe YY' et contenant l'axe XX' (Fig 3 et Fig 3a).
Les deux nervures supérieures 40 qui forment les deux branches du haut du Y sont superposées aux deux nervures inférieures 39 qui sont disposées en regard des fentes 58 et 60 (Fig 3b).
Le fait de superposer les trois nervures supérieures 40 aux six nervures inférieures 39 permet d'accroître l'impulsion transmise par l'écoulement d'eau dans la chambre de mesure 28 à la turbine et ainsi de renforcer le couple moteur transmis à ladite turbine.
Le redressement de la courbe d'erreur aux débits élevés est principalement obtenu par l'agencement des nervures supérieures et inférieures.
Il convient de remarquer que l'agencement des nervures inférieures et supérieures dans la chambre de mesure par rapport à l'injecteur et à l'éjecteur serait également applicable dans un compteur d'eau avec une boite d'injection comportant un injecteur et un éjecteur de forme connues, telles que représentées sur la figure 1, ou même dans un compteur d'eau plus classique avec les tubulures désaxées. Cela permettrait dans les deux cas d'améliorer la sensibilité du compteur aux bas débits.

La figure 3c illustre une variante de réalisation dans laquelle le profil de la deuxième paroi 70 en projection dans le plan de cette figure n'est pas rectiligne mais concave.
En fonction de ce profil, le profil de la première paroi 72 est modifié de telle manière que la distance entre la tubulure d'amenée 24 et la surface profilée de la première paroi 72 que rencontre l'écoulement d'eau est supérieure à la même distance représentée sur le compteur de la figure 3. Cette configuration de la surface de la première paroi permet une mise en vitesse plus progressive de l'écoulement d'eau issu de la tubulure d'amenée 24 que dans le compteur d'eau représenté à la figure 3.
Il convient de noter que cette forme d'injecteur crée moins de perte de charge que celle représentée à la figure 3 pour une même section débouchant au droit du diamètre interne 54b de la boite d'injection.
A l'exception du profil de la deuxième paroi, et des valeurs numériques relatives au profil de la première paroi, tout ce qui a été dit précédemment en référence aux figures 2, 3, 3a et 3b s'applique également à cette variante de réalisation.

Selon une autre variante représentée à la figure 3d, deux fentes 74 et 76 sont ménagées dans la boite d'injection 54 du compteur d'eau en vis-à-vis de la tubulure d'amenée de l'eau 24 de manière à former deux injecteurs.
Ces deux fentes 74 et 76 sont séparées l'une de l'autre par une paroi profilée 78 formant déflecteur qui est disposé en vis-à-vis de l'écoulement d'eau issu de la tubulure d'amenée 24.
Sur cette figure, le déflecteur profilé 78 s'étend à partir du diamètre interne 54b de la boite d'injection 54 en direction de la tubulure d'amenée 24 mais se termine à proximité du diamètre externe de ladite boite d'injection. Il est néanmoins possible d'envisager une configuration dans laquelle le déflecteur relie les diamètres interne 54b et externe 54a de la boite d'injection 54.
Comme représenté sur la figure 3d, la première fente 74 offre à l'écoulement d'eau issu de la tubulure d'amenée 24 une surface profilée 75 augmentant progressivement la vitesse dudit écoulement et qui est formée principalement d'une première portion concave 75a et d'une seconde portion convexe 75b modifiées par rapport à la forme de la surface profilée 62 de la figure 3 de manière à permettre une mise en vitesse plus progressive de l'écoulement d'eau.
En effet, il convient de noter que la distance entre la tubulure d'amenée 24 et la surface profilée 75 de la première fente 74 est supérieure à la même distance représentée sur le compteur de la figure 3.
La surface profilée 75 de la première fente 74 coopère avec une paroi 78a du déflecteur profilé 78 placée en regard de ladite surface profilée.
La paroi 78a du déflecteur 78 a pour fonction de guider l'écoulement de liquide mis progressivement en vitesse par la surface profilée 75.
En outre, la seconde fente 76 possède une paroi 77 située en regard du déflecteur profilé 78 et qui est la plus éloignée de la surface profilée 75 de la première fente 74.
Cette paroi 77 présente en projection dans le plan de la figure 3d qui est perpendiculaire à l'axe longitudinal XX' un profil concave qui coopère avec la paroi 78b du déflecteur profilé 78 placée en regard en vue d'une mise en vitesse progressive de l'écoulement d'eau provenant de la tubulure d'amenée 24.

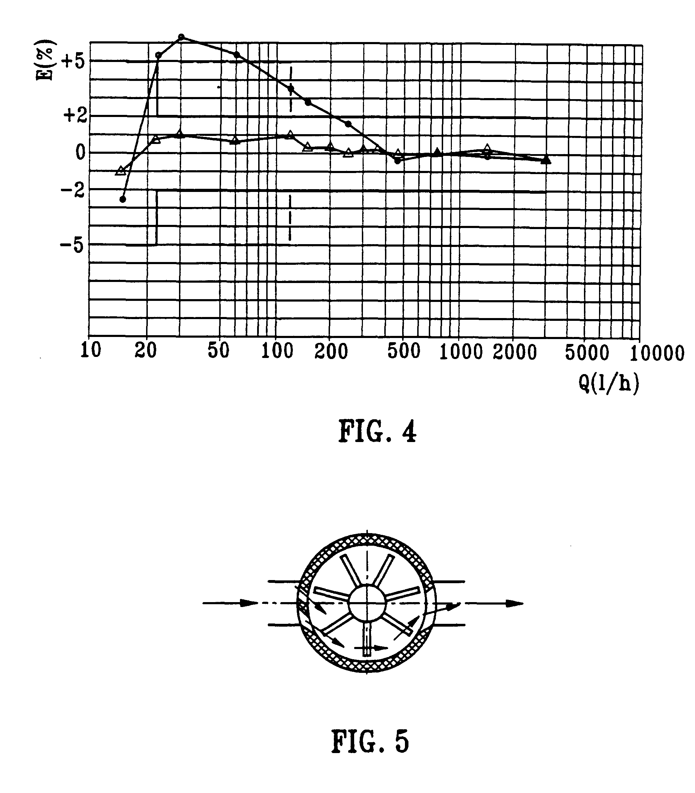

La disposition de la figure 3d peut par exemple être utile pour l'amélioration aux bas débits du couple moteur transmissible par le compteur d'eau par rapport aux compteurs de l'art antérieur, notamment celui de la figure 5, lorsque l'on augmente le calibre dudit compteur.
Cette variante de réalisation peut comporter les autres caractéristiques qui ont été décrites en référence aux figures 2, 3, 3a et 3b à l'exception des caractéristiques concernant la forme de la deuxième paroi 64 et des valeurs numériques relatives à la première paroi 62 et à la deuxième paroi 64.

A titre d'exemple numérique, la chambre de mesure 28 a un diamètre interne de 45 mm, le boîtier 54 a une épaisseur de 12 mm, les pales 36 de la turbine 30 ont une hauteur de 14 mm, les nervures supérieures 40 ont une hauteur de 2 mm, une largeur de 2, 5 mm et une longueur de 9, 5 mm, les nervures inférieures 39 ont une hauteur de 4 mm, une largeur de 1, 5 mm et une longueur de 13 mm.
Les fentes 58 et 60 ont une hauteur de 17 mm, une largeur au droit de leur raccordement avec les tubulures 24 et 26 de 21 mm et une largeur à l'endroit où elles débouchent dans la chambre de mesure de 6, 5 mm.
Les profils C1, C2 et C3 de la surface profilée 62 ont respectivement un rayon égal à 5 mm, 8 mm et 29, 5 mm. Les deux profils L1 et L2 ont respectivement pour longueur 3, 5 et 1 mm.
La figure 4 représente deux courbes qui traduisent l'erreur relative sur la mesure effectuée par deux compteurs d'eau en fonction du débit traversant chaque compteur. Les compteurs ont été placés dans une position telle que l'axe de la turbine est vertical. Le canal d'erreur autorisée pour un compteur de classe C a été représenté en trait pleins sur cette figure.
La courbe A a été obtenue avec un compteur d'eau de l'art antérieur tel que représenté sur la figure 5.
Un tel compteur comporte des tubulures d'amenée et d'évacuation du liquide alignées entre elles et dont l'axe d'alignement YY' rencontre perpendiculairement l'axe longitudinal XX' de la turbine.
Une boite d'injection est disposée dans la bâche du compteur à la périphérie de la turbine et comporte, deux fentes placées en regard de la tubulure d'amenée du liquide et une fente plus large placée en regard de la tubulure d'évacuation du liquide.
Chacune de ces fentes est inclinée symétriquement par rapport à l'axe d'alignement YY' des tubulures.
La boite d'injection a une épaisseur de paroi de 4, 5 mm, un diamètre intérieur de 48, 8 mm, et les fentes ont une hauteur de 13 mm.

Quatre nervures inférieures régulièrement espacées entre elles sont disposées dans la partie inférieure de la chambre de mesure.
La turbine comporte sept pales de hauteur égale à 12 mm.
Le diamètre extérieur de la turbine munie des pales est de 45, 5 mm.
Deux nervures supérieures sont disposées dans la partie supérieure de la chambre de mesure sur la platine.
Le compteur est doté d'un entraînement magnétique par attraction du type face à face, chacun des aimants étant réalisé sous la forme d'une couronne.

La courbe B a été obtenue avec un compteur d'eau selon l'invention et plus précisément avec celui représenté sur les figures 2 et 3.
Ainsi, on constate que le compteur d'eau selon l'invention améliore très nettement le couple moteur transmis à la turbine aux faibles débits ce qui permet de compenser le couple parasite dû à l'entraînement magnétique et donc d'obtenir une meilleure précision au comptage quelle que soit la position de l'axe de la turbine.

Avantageusement, la boite d'injection 54, la turbine axiale 30 et la platine supérieure 44 constituent un ensemble modulaire qui peut être intégré dans une bâche 22 de compteur d'eau de dimensions appropriées.

## Revendications

1. Compteur (20) de liquide à jet unique comprenant un corps (22) dans lequel est ménagée une chambre de mesure (28) de forme sensiblement cylindrique équipée d'une turbine (30) d'axe longitudinal XX' et munie de pales (36), deux tubulures d'amenée (24) et d'évacuation (26) du liquide raccordées audit corps et alignées suivant un axe YY' rencontrant perpendiculairement ledit axe XX', un boîtier (54) disposé dans ledit corps à la périphérie de la turbine et comportant au moins deux fentes (58, 60) respectivement placées en vis à vis des tubulures d'amenée et d'évacuation, lesdites fentes étant destinées à injecter et à éjecter l'écoulement de liquide de manière inclinée par rapport à l'axe d'alignement des tubulures, **caractérisé en ce qu'**au moins une fente (58 ; 74) est placée en vis à vis de la tubulure d'amenée et offre à l'écoulement de liquide issu de ladite tubulure une surface profilée (62 ; 72 ; 75), ladite surface profilée appartenant à une première paroi (62 ; 72 ; 75) de la fente (58 ; 74) située en regard de la tubulure d'amenée (24) et augmentant progressivement la vitesse dudit écoulement, le profil de ladite surface étant principalement formé de deux portions courbes aux concavités inversées,
ladite fente comportant une deuxième paroi (64 ; 70 ; 78a) faisant face à la première paroi, et présentant en projection dans un plan perpendiculaire à l'axe longitudinal XX', un profil sensiblement rectiligne ou concave destiné à guider l'écoulement de liquide mis progressivement en vitesse par la surface profilée de la première paroi.

2. Compteur selon la revendication 1, dans lequel la portion courbe la plus proche de la tubulure d'amenée est concave.

3. Compteur selon l'une des revendications 1 à 2, dans lequel la fente (58 ; 74) a une section de passage locale rectangulaire dont la plus grande dimension s'étend parallèlement à l'axe longitudinal XX'.

4. Compteur selon la revendication 1, dans lequel le profil sensiblement rectiligne de la deuxième paroi (64) lorsqu'il est prolongé fictivement en direction de la chambre de mesure (28) tangente un cercle C4 de diamètre inférieur à un cercle défini par l'extrémité des pales (36) de la turbine (30).

5. Compteur selon la revendication 1, dans lequel le profil sensiblement rectiligne de la deuxième paroi (64) forme avec l'axe d'alignement YY' des tubulures, un angle d'inclinaison compris entre 19° et 24°.

6. Compteur selon l'une des revendications 1 à 5, dans lequel la dimension de la fente (58) qui s'étend perpendiculairement à l'axe longitudinal XX' dans un plan perpendiculaire à l'axe d'alignement YY' des tubulures est supérieure au diamètre interne de la tubulure d'amenée (24) dans sa partie la plus proche de ladite tubulure.

7. Compteur selon la revendication 1, dans lequel la plus grande dimension de la fente est sensiblement égale au diamètre interne de la tubulure d'amenée (24).

8. Compteur selon les revendications 1 à 3, dans lequel la portion courbe la plus proche de la tubulure d'amenée (24) présente en projection dans un plan perpendiculaire à l'axe longitudinal XX' un profil circulaire C1.

9. Compteur selon la revendication 8, dans lequel la portion courbe qui possède une concavité inversée à celle qui est la plus proche de la tubulure d'amenée (24) présente en projection dans un plan perpendiculaire à l'axe longitudinal XX' un profil circulaire C2 de plus grand rayon que C1.

10. Compteur selon les revendications 8 et 9, dans lequel les deux profils circulaires C1 et C2 sont raccordés entre eux en projection dans un plan perpendiculaire à l'axe longitudinal XX' par un troisième profil circulaire C3 de concavité inverse à celle du profil circulaire C1 et qui possède un rayon supérieur à celui du profil circulaire C2.

11. Compteur selon les revendications 8 et 9, dans lequel le profil de la surface de la première paroi (62) située en regard de la tubulure d'amenée (24) se prolonge en aval du profil circulaire C2 par un profil sensiblement rectiligne L1 en projection dans un plan perpendiculaire à l'axe longitudinal XX'.

12. Compteur selon la revendication 11, dans lequel le profil sensiblement rectiligne L1 forme avec l'axe d'alignement YY' des tubulures, un angle d'inclinaison compris entre 28 et 32°.

13. Compteur selon les revendications 1 et 12, dans lequel le profil sensiblement rectiligne L1 se prolonge vers l'aval par un autre profil sensiblement rectiligne L2 parallèle au profil sensiblement rectiligne de la paroi opposée (64).

14. Compteur selon l'une des revendications 1 à 13, dans lequel la paroi (62) dont la surface est profilée masque la chambre de mesure (28) à l'écoulement de liquide situé dans la tubulure d'amenée (24).

15. Compteur selon l'une des revendications 1 à 14, dans lequel la plus grande dimension de la fente (58) est supérieure à la dimension des pales (36) de la turbine (30) s'étendant dans la même direction.

16. Compteur selon l'une des revendications 1 à 15, dans lequel le boîtier (54) possède une paroi épaisse de forme générale sensiblement cylindrique.

17. Compteur selon l'une des revendications 1 à 16, dans lequel les deux fentes (58, 60) sont symétriques l'une de l'autre par rapport à un plan perpendiculaire à l'axe d'alignement des tubulures YY' et contenant l'axe longitudinal XX'.

18. Compteur selon l'une des revendications 1 à 3, dans lequel deux fentes (74 , 76) sont placées en vis-à-vis de la tubulure d'amenée (24) du liquide, l'une desdites fentes appelée première fente (74) offrant à l'écoulement de liquide une surface profilée (75) augmentant progressivement la vitesse dudit écoulement.

19. Compteur selon la revendication 18, dans lequel les deux fentes (74 , 76) sont séparées l'une de l'autre par une paroi profilée (78) placée en vis-à-vis de la tubulure d'amenée (24) du liquide.

20. Compteur selon la revendication 18 ou 19, lorsque la revendication 18 dépend de la revendication 3, dans lequel la seconde fente (76) possède une paroi (77) qui est la plus éloignée de la surface profilée (75) de la première fente (74) et qui présente en projection dans un plan perpendiculaire à l'axe longitudinal XX' un profil concave.

## Patentansprüche

1. Einzelstrahl-Flüssigkeitsmesser (20), mit einem Körper (22), in dem eine Meßkammer (28) mit im wesentlichen zylindrischer Form ausgebildet ist, die mit einer Turbine (30), die eine Längsachse XX' besitzt und mit Schaufeln (36) versehen ist, ausgerüstet ist, einem Flüssigkeitszuführungs-Rohrstutzen (24) und einem Flüssigkeitsabführungs-Rohrstutzen (26), die mit dem Körper verbunden sind und auf eine Achse YY' ausgerichtet sind, die die Achse XX' senkrecht schneidet, einem Gehäuse (54), das im Körper am Umfang der Turbine angeordnet ist und wenigstens zwei Schlitze (58, 60) aufweist, die gegenüber dem Zuführungsrohrstutzen bzw. dem Abführungsrohrstutzen angeordnet sind, wobei die Schlitze dazu bestimmt sind, die Flüssigkeitsströmung in bezug auf die Ausrichtungsachse der Rohrstutzen geneigt ein- bzw. auszuspritzen, **dadurch gekennzeichnet, daß** wenigstens ein Schlitz (58; 74) gegenüber dem Zuführungsrohrstutzen angeordnet ist und der vom Rohrstutzen austretenden Flüssigkeitsströmung eine Profiloberfläche (62; 72; 75) entgegensetzt, wobei die Profiloberfläche zu einer ersten Wand (62; 72; 75) des Schlitzes (58; 74) gehört, die sich gegenüber dem Zuführungsrohrstutzen (24) befindet, und die Geschwindigkeit der Strömung fortschreitend erhöht, wobei das Profil der Oberfläche hauptsächlich aus zwei gekrümmten Abschnitten mit entgegengesetzten Konkavitäten gebildet ist,
wobei der Schlitz eine zweite Wand (64; 70; 78a) aufweist, die sich gegenüber der ersten Wand befindet und in der Projektion auf eine zur Längsachse XX' senkrechte Ebene ein im wesentlichen geradliniges oder konkaves Profil aufweist, das dazu bestimmt ist, die durch die Profiloberfläche der ersten Wand fortschreitend beschleunigte Flüssigkeitsströmung zu führen.

2. Messer nach Anspruch 1, in dem der gekrümmte Abschnitt, der sich am nächsten bei dem Zuführungsrohrstutzen befindet, konkav ist.

3. Messer nach einem der Ansprüche 1 bis 2, in dem der Schlitz (58; 74) einen Querschnitt mit rechtwinkligem lokalen Durchlaß besitzt, dessen größte Abmessung sich parallel zur Längsachse XX' erstreckt.

4. Messer nach Anspruch 3, in dem das im wesentlichen geradlinige Profil der zweiten Wand (64) dann, wenn es fiktiv in Richtung der Meßkammer (28) verlängert wird, einen Kreis C4 mit einem Durchmesser, der kleiner als ein durch das Ende der Schaufeln (36) der Turbine (30) definierter Kreis ist, tangential berührt.

5. Messer nach Anspruch 1, in dem das im wesentlichen geradlinige Profil der zweiten Wand (64) mit der Ausrichtungsachse YY' der Rohrstutzen einen Neigungswinkel bildet, der im Bereich von 19° bis 24° liegt.

6. Messer nach einem der Ansprüche 1 bis 5, in dem die Abmessung des Schlitzes (58), die sich senkrecht zur Längsachse XX' in einer zur Ausrichtungsachse YY' der Rohrstutzen senkrechten Ebene erstreckt, in seinem Teil, der sich am nächsten bei dem Zuführungsrohrstutzen (24) befindet, größer als der Innendurchmesser des Rohrstutzens ist.

7. Messer nach Anspruch 1, in dem die größte Abmessung des Schlitzes im wesentlichen gleich dem Innendurchmesser des Zuführungsrohrstutzen (24) ist.

8. Messer nach den Ansprüche 1 bis 3, in dem der gekrümmte Abschnitt, der sich am nächsten bei dem Zuführungsrohrstutzen (24) befindet, in der Projektion auf eine zur Längsachse XX' senkrechte Ebene ein kreisförmiges Profil C1 aufweist.

9. Messer nach Anspruch 8, in dem der gekrümmte Abschnitt, der eine Konkavität besitzt, die zu jener, die sich am nächsten bei dem Zuführungsrohrstutzen (24) befindet, entgegengesetzt ist, in der Projektion auf eine zur Längsachse XX' senkrechte Ebene ein kreisförmiges Profil C2 mit größerem Radius als C 1 aufweist.

10. Messer nach den Ansprüchen 8 und 9, in dem die beiden kreisförmigen Profile C1 und C2 in der Projektion auf eine zur Längsachse XX' senkrechte Ebene durch ein drittes kreisförmiges Profil C3, das eine Konkavität besitzt, die zu jener des kreisförmigen Profils C1 entgegengesetzt ist, und einen Radius besitzt, der größer als jener des kreisförmigen Profils C2 ist, miteinander verbunden sind.

11. Messer nach den Ansprüchen 8 und 9, in dem das Profil der Oberfläche der ersten Wand (62), das sich gegenüber dem Zuführungsrohrstutzen (24) befindet, stromabwärts vom kreisförmigen Profil C2 in der Projektion auf eine zur Längsachse XX' senkrechte Ebene durch ein Profil L1 verlängert ist, das im wesentlichen geradlinig ist.

12. Messer nach Anspruch 11, in dem das im wesentlichen geradlinige Profil L1 mit der Ausrichtungsachse YY' der Rohrstutzen einen Neigungswinkel im Bereich von 28 bis 32° bildet.

13. Messer nach den Ansprüchen 1 und 12, in dem das im wesentlichen geradlinige Profil L1 abströmseitig durch ein weiteres im wesentlichen geradliniges Profil L2 verlängert ist, das zu dem im wesentlichen geradlinigen Profil der gegenüberliegenden Wand (64) parallel ist.

14. Messer nach einem der Ansprüche 1 bis 13, in dem die Wand (62), deren Oberfläche ein Profil aufweist, die Meßkammer (28) gegenüber der Flüssigkeitsströmung, die sich in dem Zuführungsrohrstutzen (24) befindet, abschirmt.

15. Messer nach einem der Ansprüche 1 bis 14, in dem die größte Abmessung des Schlitzes (58) größer ist als die Abmessung der Schaufeln (36) der Turbine (30), die sich in derselben Richtung erstreckt.

16. Messer nach einem der Ansprüche 1 bis 15, in dem das Gehäuse (54) eine dicke Wand mit im wesentlichen zylindrischer allgemeiner Form besitzt.

17. Messer nach einem der Ansprüche 1 bis 16, in dem die beiden Schlitze (58, 60) in bezug auf eine Ebene, die zur Ausrichtungsachse YY' der Rohrstutzen senkrecht ist und die Längsachse XX' enthält, zueinander symmetrisch sind.

18. Messer nach einem der Ansprüche 1 bis 3, in dem zwei Schlitze (74, 76) gegenüber dem Flüssigkeitszuführungs-Rohrstutzen (24) angeordnet sind, wovon einer erster Schlitz (74) genannt wird und der Flüssigkeitsströmung einer Profiloberfläche (75) entgegensetzt, die die Geschwindigkeit der Strömung fortschreitend erhöht.

19. Messer nach Anspruch 18, in dem die beiden Schlitze (74, 76) durch eine Profilwand (78), die sich gegenüber dem Flüssigkeitszuführungs-Rohrstutzen (24) befindet, voneinander getrennt sind.

20. Messer nach Anspruch 18 oder 19 wenn Anspruch 18 von Anspruch 3 abhängt, in dem der zweite Schlitz (76) eine Wand (77) besitzt, die von der Profiloberfläche (75) des ersten Schlitzes (74) am weitesten entfernt ist und in der Projektion auf eine zur Längsachse XX' senkrechte Ebene ein konkaves Profil aufweist.

## Claims

1. A single-jet liquid meter (20) comprising a body (22) in which a measurement chamber (28) of substantially cylindrical shape is disposed, the chamber being fitted with a spinner (30) having a longitudinal axis XX' and provided with blades (36), a liquid feed tube (24) and a liquid discharge tube (26) connected to said body and in alignment on an axis YY' that intersects said axis XX' perpendicularly, a housing (54) disposed in said body around the periphery of the spinner and including at least two slots (58, 60) respectively placed facing the feed tube and the discharge tube, said slots being designed to inject and eject the liquid flow in inclined manner relative to the alignment axis of the tubes, the meter being **characterized in that** at least one slot (58; 74) is placed facing the feed tube and offers to the flow of liquid coming from said tube a shaped surface (62; 72; 75),the shaped surface belonging to a first wall (62; 72; 75) of the slot (58; 74) which is situated facing the feed tube (24) and progressively increasing the speed of said flow, the profile of the surface is mainly constituted by two curved portions having oppositely-directed concave sides, said slot comprising a second wall (64; 70; 78a) facing the first wall and presenting a profile that is substantially rectilinear or concave in projection on a plane perpendicular to the longitudinal axis XX' for guiding the flow of liquid progressively accelerated by the shaped surface of the first wall.

2. A meter according to claim 1, in which the curved portion closer to the feed tube is concave.

3. A meter according to any one of claims 1 to 2, in which the slot (58; 74) has a local flow passage that is rectangular, with the larger dimension thereof extending parallel to the longitudinal axis XX'.

4. A meter according to claim 1, in which the substantially rectilinear profile of the second wall (64), when geometrically extended towards the measurement chamber (28), is tangential to a circle C4 of diameter smaller than that of a circle defined by the ends of the blades (36) of the spinner (30).

5. A meter according to claim 1, in which the substantially rectilinear profile of the second wall (64) is inclined relative to the alignment axis YY' of the tubes at an angle lying in the range 19° to 24°.

6. A meter according to any one of claims 1 to 5, in which the dimension of the slot (58) that extends perpendicularly to the longitudinal axis XX' in a plane perpendicular to the alignment axis YY' of the tubes is greater in size than the inside diameter of the feed tube (24) in its portion closest to said tube.

7. A meter according to claim 1, in which the largest dimension of the slot is substantially equal to the inside diameter of the feed tube (24).

8. A meter according to claims 1 to 3, in which the curved portion that is closer to the feed tube (24) presents a circular profile C1 in projection on a plane perpendicular to the longitudinal axis XX'.

9. A meter according to claim 8, in which the curved portion of concave side that is oppositely directed to the portion that is closer to the feed tube (24) presents a circular profile C2 of larger radius than C1 in projection on a plane perpendicular to the longitudinal axis XX'.

10. A meter according to claims 8 and 9, in which the two circular profiles Cl and C2 are connected together in projection on a plane perpendicular to the longitudinal axis XX' by a third circular profile C3 of concave side opposite to that of the circular profile C I and having a radius that is greater than the radius of the circular profile C2.

11. A meter according to claims 8 and 9, in which the profile of the surface of the first wall (62) situated facing the feed tube (24) is extended downstream from the circular profile C2 by a profile L1 that is substantially rectilinear in projection on a plane perpendicular to the longitudinal axis XX'.

12. A meter according to claim 11, in which the substantially rectilinear profile L1 is inclined relative to the alignment axis YY' of the tubes at an angle lying in the range 28° to 32°.

13. A meter according to claims I and 12, in which the substantially rectilinear profile L1 is extended downstream by another substantially rectilinear profile L2 parallel to the substantially rectilinear profile of the opposite wall (64).

14. A meter according to any one of claims 1 to 13, in which the wall (62) that has the shaped surface masks the measurement chamber (28) from the flow of liquid situated in the feed tube (24).

15. A meter according to any one of claims 1 to 14, in which the greatest dimension of the slot (58) is greater than the dimension of the blades (36) of the spinner (30) extending in the same direction.

16. A meter according to any one of claims 1 to 15, in which the housing (54) has a thick wall that is generally substantially cylindrical in shape.

17. A meter according to any one of claims 1 to 16, in which the two slots (58, 60) are symmetrical to each other about a plane perpendicular to the alignment axis YY' of the tubes and containing the longitudinal axis XX'.

18. A meter according to any one of claims 1 to 3, in which two slots (74, 76) are placed facing the liquid feed tube (24), one of said slots. referred to as a "first" slot (74), offering the flow of liquid a shaped surface (75) that progressively increases the speed of said flow.

19. A meter according to claim 18, in which the two slots (74. 76) are separated from each other by a shaped wall (78) placed facing the liquid feed tube (24).

20. A meter according to claim 18 or 19, for claim 18 dependent on claim 3, in which the second slot (76) possesses a wall (77) which is furthest from the shaped surface (75) of the first slot (74) and which presents a concave profile in projection on a plane perpendicular to the longitudinal axis XX'.
